# EUROPÄISCHE PATENTSCHRIFT

(11) **EP 0 964 170 B1**
(45) Veröffentlichungstag und Bekanntmachung des Hinweises auf die Patenterteilung: **21.08.2002**
(21) Anmeldenummer: 99101234.5
(22) Anmeldetag: 22.01.1999
(51) Int. Cl.: F16B 21/16, F16B 5/06, F16B 19/10, B60R 13/02

(54) **Verbindungselement zwischen einem Träger, insbesondere einem Karosserieteil eines Kraftfahrzeugs, und einem Plattenelement**
Fastening element between a support and a panel, especially a body element of an automotive vehicle
Dispositif de fixation entre un support et un panneau, notamment d'une pièce de carrosserie d'un véhicule automobile

(30) Priorität: 10.06.1998 DE 29810437 U
(43) Veröffentlichungstag der Anmeldung: 15.12.1999
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 735 285
- EP-A- 0 921 323
- DE-U- 29 718 487
- US-A- 4 861 208
- US-A- 5 419 606

## Beschreibung

Die Erfindung bezieht sich auf eine Verbindungseinheit zwischen einem Träger, insbesondere einem Karosserieteil eines Kraftfahrzeuges und einem Plattenelement, insbesondere einer Tür- oder Wandverkleidung, mit einem an dem Plattenelement befestigbaren Oberteil und einem mit dem Träger verbindbaren Unterteil, wobei zwischen dem Oberteil und dem Unterteil ein mit Verrastungselementen versehener, halsförmig ausgebildeter Zwischenbereich vorgesehen ist und das Verbindungselement ein in eine Trägeröffnung einlagerbares Eingriffsteil durchsetzt. Eine derartige Verbindungseinheit ist z.B. aus der US 4 861 208 A bekannt, bei der das Eingriffsteil einen die Oberseite des Trägers beaufschlagenden Dichtflansch aufweist.

Weiterer Stand der Technik ist in diesem Zusammenhang ein Verbindungselement (EP 0 726 401 A1), bei welchem zwei oberhalb einer umlaufenden elastischen Dichtlippe angeordnete Flansche unterschiedliche Elastizität aufweisen. Die beiden Flansche lassen sich seitlich in Taschen eines Eingriffsbereichs des Oberteils einschieben; eine untere Dichtlippe ist in der Lage, den oberen Bereich eines Trägers im montierten Zustand zu beaufschlagen und hierdurch eine annähernd dichte Verbindung herzustellen.

Weiterer Stand der Technik ist ein Element mit einem an einem Plattenelement befestigbaren Oberteil, einem Mittelteil und einem Halteelement (DE 4 014 589 C1). Durch diese Konstruktion ist ein insbesondere in der Kraftfahrzeugindustrie erforderlicher Toleranzausgleich jedoch nur in der parallel zum Träger liegenden Ebene möglich.

In der nicht vorveröffentlichten EP 0 921 323 A, die die Priorität der deutschen Patentanmeldung 197 53 678.6 in Anspruch nimmt und von der die vorliegende Erfindung eine Weiterentwicklung ist, ist eine Verbindung vorgeschlagen worden, bei welcher zwischen dem Oberteil und dem Unterteil ein mit Verrastungselementen versehener, halsförmig ausgebildeter Zwischenbereich vorgesehen ist, welcher ein in eine Trägeröffnung einlagerbares Eingriffsteil durchsetzt, das die Oberseite des Trägers dichtend beaufschlagt. Der Zwischenbereich ist oberhalb des Trägers von einem Hülsenteil umgeben, welches mit den Verrastungselementen verriegelbar ist.

Aufgabe der vorliegenden Erfindung ist, die vorgenannte Verbindungseinheit so zu verbessern, dass auf einfache Weise eine Vormontage beim Einsetzen in den Träger möglich ist, wobei nach vollendeter Montage eine verbesserte Dichtwirkung gewährleistet sein soll.

Diese Aufgabe wird erfindungsgemäß dadurch gelöst, dass der Zwischenbereich oberhalb des Trägers von einem Hülsenteil umgeben ist, welches mit den Verrastungselementen und mit dem Eingriffsteil verriegelbar ist und dass zwischen dem Hülsenteil und dem Eingriffsteil ein die Oberseite des Trägers beaufschlagendes Dichtelement angeordnet ist. Durch den Einsatz eines zusätzlichen Hülsenteils ergibt sich die Möglichkeit einer Vormontage, wobei darüber hinaus durch das Zusammenwirken des Hülsenteils mit einem Dichtelement auf einfache Weise eine erhebliche Verbesserung der Dichtwirkung der gesamten Verbindungseinheit hergestellt wird.

Das Hülsenteil kann einen Mantelteil aufweisen, welcher innenseitig mit Gegenrasten für die Verrastungselemente des Zwischenbereichs versehen ist. Weiterhin kann das Hülsenteil unterhalb des Mantelbereichs einen Flansch besitzen, welcher das Dichtelement zumindest teilweise überdeckt. Hierdurch wird eine mögliche mechanische Einwirkung auf das Dichtelement nach durchgeführter Montage vermieden.

Nach einem weiteren Merkmal der Erfindung kann das Eingriffsteil mit mindestens zwei federnden Raststegen versehen sein, welche sich im montierten Zustand durch Öffnungen des Flanschs erstrecken und hinter diesem verriegelt sind. Vorzugsweise finden vier federnde Rastelemente Anwendung, welche diagonal einander gegenüber liegen. Durch diese federnden Rastelemente wird eine gute und sichere Verbindung zwischen dem Eingriffsteil und dem Hülsenteil hergestellt.

Das Eingriffsteil kann in weiterer Ausgestaltung der Erfindung einen Scheibenbereich aufweisen, welcher außenseitig mit den Stegen verbunden ist und innenseitig in einen sich durch die Trägeröffnung erstreckenden Hülsenbereich übergeht. Hierbei kann der Hülsenbereich zumindest eine Teillänge des Zwischenbereichs umfassen und mit diesem verriegelbar sein. Die Verriegelung kann über mehrere, federnde Eingriffszungen erfolgen, welche in im Abstand hintereinander liegende Gegenrasten des Zwischenbereichs einlagerbar sind. Zur Erleichterung der Montage können die Eingriffszungen des Hülsenbereichs konisch zulaufend ausgebildet sein.

Um die gesamte Einheit funktionssicher miteinander zu verbinden, besteht die Möglichkeit, dass sich die Raststege des Eingriffsteils durch Öffnungen des Dichtelements erstrecken, wobei ein umlaufender Wulst des Dichtelements zwischen einem gewölbten Abschlussrand des Flanschs und der Außenseite des jeweiligen Raststeges eingespannt ist.

Nach einem anderen Merkmal der Erfindung kann das Dichtelement außenseitig eine den Träger beaufschlagende Dichtlippe und innenseitig eine zwischen der Unterseite des Flansches und der Oberseite des Scheibenbereichs eingespannte Dichtplatte aufweisen. Diese Dichtplatte kann oberseitig in einen Abschlussring übergehen, dessen Außendurchmesser auf die Innenwandung des Mantelbereichs abgestellt ist.

Vorteilhafte Weiterbildungen ergeben sich aus den weiteren Unteransprüchen.

Die Erfindung wird nachfolgend anhand eines in der Zeichnung dargestellten Ausführungsbeispiels näher beschrieben. In der Zeichnung zeigen:
- Fig. 1a-d: eine schematische Seitenansicht der einzelnen Teile der erfindungsgemäßen Verbindungseinheit;
- Fig. 2: eine schematische Seitenansicht der Verbindungseinheit in vormontierter Position;
- Fig. 3: die Ausführungsform nach Fig. 2 nach durchgeführter Endmontage;
- Fig.4: einen Mittelschnitt durch die erfindungsgemäße Verbindungseinheit nach Endmontage;
- Fig. 5a, b: zwei verschiedene Anwendungsmöglichkeiten der erfindungsgemäßen Verbindungseinheit, jeweils in Seitenansicht.

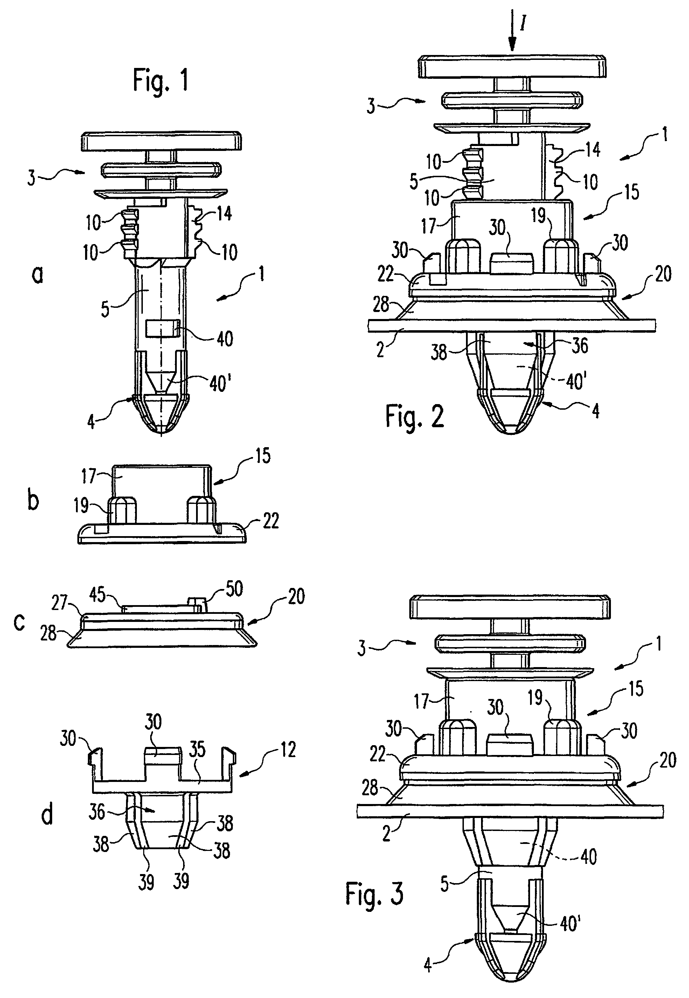

Aus den Figuren 1a bis 1d ist erkennbar, dass die erfindungsgemäße aus Kunststoff bestehende Einheit aus vier Teilen besteht, nämlich einem Verbindungselement 1 mit einem an einem Plattenelement befestigbaren Oberteil 3 und einem mit einem Trägerteil 2 verbindbaren Unterteil 4, welches mit im axialen Abstand voneinander angeordneten Gegenrasten 40 bzw. 40' versehen ist. Der Zwischenbereich 5 ist halsförmig ausgebildet und weist Verrastungselemente 10 auf, wobei diese Verrastungselemente 10 an Stegen 14 des Zwischenbereichs 5 angeordnet sind.

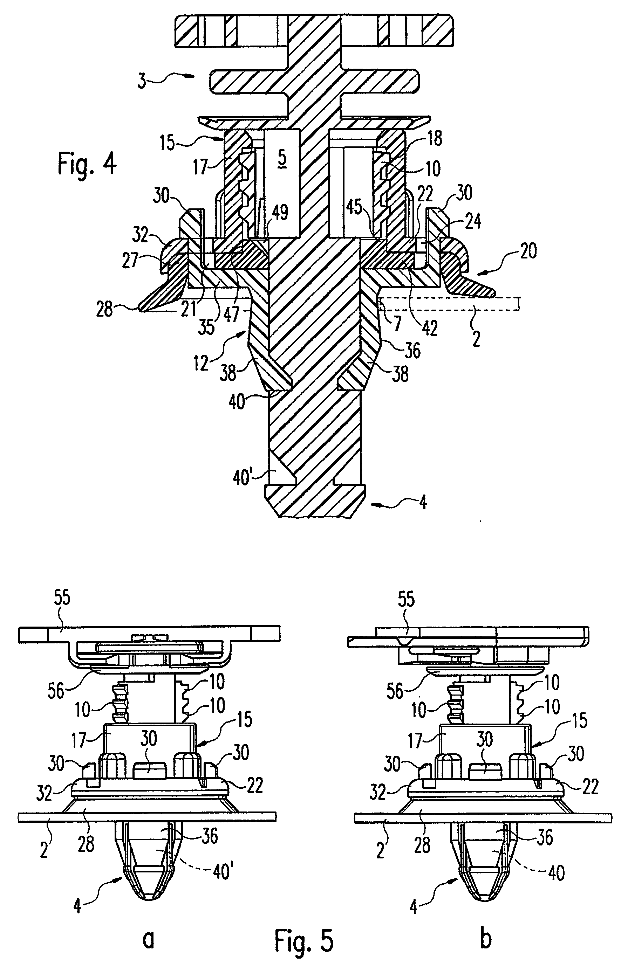

Fig. 1b zeigt ein Hülsenteil 15, welches einen Mantelbereich 17 aufweist, der gemäß Fig. 4 innenseitig mit Gegenrasten 18 für die Verrastungselemente 10 des Zwischenbereichs 5 versehen ist.

Oberhalb des Mantelteils 17 weist das Hülsenteil 15 einen Flansch 22 auf, welcher das Dichtelement 20 nach Fig. 4 über einen gewölbten Abschlussbereich 32 teilweise überdeckt. Der Mantelbereich 17 des Hülsenteils 15 ist mit mehreren Außenrippen 19 versehen.

Fig. 1c stellt ein Dichtelement 20 dar, das aus einer umlaufenden Wulst 27 und einer daran anschließenden Dichtlippe 28 besteht. An diese Dichtlippe 28 bzw. an die umlaufende Wulst 27 schließt nach Fig. 4 eine Dichtplatte 42 an, welche nach Fig. 1c in einen Abschlussring 45 übergeht. Auf der Oberseite des Abschlussrings 45 kann sich mindestens eine Rippe 50 befinden.

Der Abschlussring 45 weist eine von dem Zwischenbereich 5 durchsetzte Trichteröffnung 49 auf. Der Außendurchmesser des Abschlussringes 45 ist auf die Innenwandung 47 des Mantelbereichs 17 des Hülsenteils 15 abgestellt.

Nach Fig. 1d findet weiterhin ein Eingriffsteil 12 Anwendung. Dieses Eingriffsteil 12 weist einen Scheibenbereich 35 auf, welcher außenseitig mit Stegen 30 verbunden sind, die Rastfunktion ausüben. Innenseitig geht der Scheibenbereich 35 in einen sich nach Fig. 4 durch eine Trägeröffnung 7 erstreckenden Hülsenbereich 36 über. Dieser Hülsenbereich 36 des Eingriffsteils 12 umfasst - wiederum nach Fig. 4 - zumindest eine Teillänge des Zwischenbereichs 5 und ist mit diesem verriegelbar. Entsprechend besteht nach Fig. 1d der Hülsenbereich 36 aus mehreren federnden Eingriffszungen 38, welche durch Schlitze 39 voneinander getrennt sind. Die Eingriffszungen 38 sind konisch zulaufend ausgebildet.

Gemäß Fig. 2 können die vier Elemente, nämlich das Verbindungselement 1, das Hülsenteil 15, das Dichtelement 20 und das Eingriffsteil 12 in vormontierter Position an einer Trägerplatte 2 angebracht werden. Hierbei durchsetzt der Zwischenbereich 5 das in die Trägeröffnung 7 eingelagerte Eingriffsteil 12.

Der in Fig. 3 und 4 dargestellten Endmontage der erfindungsgemäßen Verbindungseinheit geht die Vormontage nach Fig. 2 voraus: hierbei lagern sich die Eingriffszungen 38 des Eingriffsteils 12 in die unteren Gegenrasten 40' des Unterteils 4 ein, wobei aus Fig. 2 darüber hinaus erkennbar ist, dass die Verrastungselemente 10 des Zwischenbereichs 5 den Mantelbereich 17 des Hülsenteils 15 überragen.

In dieser vormontierten Position lässt sich die erfindungsgemäße Verbindungseinheit in die Trägeröffnung 7 des Trägers 2 einsetzen.

Wird nun in Pfeilrichtung I ein Druck auf das Oberteil 3 des Verbindungselements 1 ausgeübt, so ergibt sich die Position nach Fig. 3 bzw. 4, d. h. die Endmontage. Hier sind die Eingriffszungen 38 in den Gegenrasten 40 des Unterteils 4 eingelagert und die Verrastungselemente 10 des Zwischenbereichs 5 greifen in die entsprechenden Gegenrasten 18 des Mantelbereichs 17 des Hülsenteils 15 ein.

Die Raststege 30 des Eingriffsteils 12 erstrecken sich durch Öffnungen 21 des Dichtelements 20 sowie durch Öffnungen 24 des Hülsenteils 15 und sind mit ihren Rastnasen auf der Oberseite des Flanschs 22 des Hülsenteils 15 verriegelt

Wie aus Fig. 4 ersichtlich, ist der umlaufende Wulst 27 des Dichtelements 20 zwischen einem gewölbten Abschlussrand 32 des Flanschs 22 des Hülsenteils 15 und der Außenseite des jeweiligen Raststeges 30 eingespannt. Aus Fig. 4 ist darüber hinaus erkennbar, dass die an die Dichtlippe 28 des Dichtelements 20 anschließende Dichtplatte 42 zwischen der Unterseite des Flanschs 22 und der Oberseite des Scheibenbereichs 35 des Eingriffsteils 12 eingespannt ist.

Die umlaufende Dichtlippe 28 des Dichtelements 20 beaufschlagt die Oberseite des Trägers 2 und stellt damit eine sichere Abdichtung her. Da der gewölbte Abschlussrand 32 des Flanschs 22 die Wulst 27 des Dichtelements 20 überdeckt, ergibt sich bei guter Abdichtung gleichzeitig ein Schutz des gesamten Dichtelements.

In der in Fig. 1 bis 4 dargestellten Ausführungsform weist das Oberteil 3 des Verbindungselements 1 drei im axialen Abstand voneinander liegende scheibenartige Elemente auf. Nach Fig. 5a und 5b besteht auch die Möglichkeit, dass nur zwei scheibenartige Elemente Anwendung finden, wobei das obere Element in ein Verriegelungselement 55 einschiebbar ist und das untere Element als Dichtung 56 dient.
Das Verriegelungselement 55 ist beispielsweise Teil eines Plattenelements, z. B. einer Tür- oder Wandverkleidung eines Kraftfahrzeuges. Dieses Verriegelungselement lässt sich nach Fig. 5a von vorn in das Oberteil 3 einschieben; nach Fig. 5b besteht auch die Möglichkeit, dass das Verriegelungselement 55 seitlich in das Oberteil 3 des Verbindungselements 1 einschiebbar ist.

Anschließend kann die erfindungsgemäße Verbindungseinheit aus der in Fig. 2 dargestellten Position in die Endmontagestellung nach Fig. 3 bzw. 4 überführt werden. Da mehrere Verrastungselemente 10 des Zwischenbereichs Anwendung finden und diese in die entsprechenden Gegenrasten des Hülsenteil 15 einlagerbar sind, ist auch in Längsrichtung der erfindungsgemäßen Verbindungseinheit ein sehr guter Toleranzausgleich bei guter Dichtwirkung der gesamten Einheit gewährleistet.

## Patentansprüche

1. Verbindungseinheit zwischen einem Träger (2), insbesondere einem Karosserieteil eines Kraftfahrzeuges, und einem Plattenelement, insbesondere einer Tür - oder Wandverkleidung,
mit einem Verbindungselement (1) mit an dem Plattenelement befestigbaren Oberteil (3) und einem mit dem Träger (2) verbindbaren Unterteil (4),
wobei zwischen dem Oberteil (3) und dem Unterteil (4) ein mit Verrastungselementen (10) versehener, halsförmig ausgebildeter Zwischenbereich (5) vorgesehen ist, und das Verbindungselement (1) ein in eine Trägeröffnung (7) einlagerbares Eingriffsteil (12) durchsetzt,
**dadurch gekennzeichnet,**
**dass** der Zwischenbereich (5) oberhalb des Trägers (2) von einem Hülsenteil (15) umgeben ist, welches mit den Verrastungselementen (10) und mit dem Eingriffsteil (12) verriegelbar ist und
**dass** zwischen dem Hülsenteil (15) und dem Eingriffsteil (12) ein die Oberseite des Trägers (2) beaufschlagendes Dichtelement (20) angeordnet ist.

2. Verbindungseinheit nach Anspruch 1, **dadurch gekennzeichnet, dass** das Hülsenteil (15) einen Mantelbereich (17) aufweist, welcher innenseitig mit Gegenrasten (18) für die Verrastungselemente (10) des Zwischenbereichs (5) versehen ist.

3. Verbindungseinheit nach Anspruch 2, **dadurch gekennzeichnet, dass** das Hülsenteil (15) unterhalb des Mantelbereichs (17) einen Flansch (22) aufweist, welcher das Dichtungselement (20) zumindest teilweise überdeckt.

4. Verbindungseinheit nach Anspruch 1 und 3, **dadurch gekennzeichnet, dass** das Eingriffsteil (12) mit mindestens zwei federnden Raststegen (30) versehen ist, welche sich im montierten Zustand durch Öffnungen (24) des Flansches (22) des Hülsenteils (15) erstrecken und hinter diesen verriegelt sind

5. Verbindungseinheit nach Anspruch 4, **dadurch gekennzeichnet, dass** sich vier federnde Raststege (30) diagonal gegenüber liegen.

6. Verbindungseinheit nach Anspruch 4 und 5, **dadurch gekennzeichnet, dass** das Eingriffsteil (12) einen Scheibenbereich (35) aufweist, welcher außenseitig mit den Stegen (30) verbunden ist und innenseitig in einen sich durch die Trägeröffnung (7) erstreckenden Hülsenbereich (36) übergeht.

7. Verbindungseinheit nach Anspruch 6, **dadurch gekennzeichnet, dass** der Hülsenbereich (36) des Eingriffsteils (12) zumindest eine Teillänge des Zwischenbereichs (5) umfasst und mit diesem verriegelbar ist.

8. Verbindungseinheit nach Anspruch 7, **dadurch gekennzeichnet, dass** der Hülsenbereich (36) aus mehreren federnden Eingriffszungen (38) besteht, welche innen in im Abstand hintereinander liegende Gegenrasten (40; 40') des Unterteils (4) einlagerbar sind.

9. Verbindungseinheit nach Anspruch 8, **dadurch gekennzeichnet, dass** die Eingriffszungen (38) des Hülsenbereichs (36) konisch zulaufend ausgebildet sind.

10. Verbindungseinheit nach einem oder mehreren der Ansprüche 4 bis 9, **dadurch gekennzeichnet, dass** sich die Raststege (30) durch Öffnungen (21) des Dichtelements (20) erstrecken und dass ein umlaufender Wulst (27) des Dichtelements (20) zwischen einem gewölbten Abschlussrand (32) des Flansches (22) und der Außenseite des jeweiligen Raststeges (30) eingespannt ist.

11. Verbindungseinheit nach Anspruch 10, **dadurch gekennzeichnet, dass** das Dichtelement (20) außenseitig eine den Träger (2) beaufschlagende Dichtlippe (28) und innenseitig eine zwischen der Unterseite des Flansches (22) und der Oberseite des Scheibenbereichs (5) eingespannte Dichtplatte (42) aufweist.

12. Verbindungseinheit nach Ansprüch 11, **dadurch gekennzeichnet, dass** die Dichtplatte (42) oberseitig in einen Abschlussring (45) übergeht, dessen Außendurchmesser auf die Innenwandung (47) des Mantelbereichs (17) abgestellt ist.

13. Verbindungseinheit nach Anspruch 12, **dadurch gekennzeichnet, dass** der Abschlussring (45) eine von dem Zwischenbereich (5) durchsetzte Trichteröffnung (49) aufweist.

14. Verbindungseinheit nach einem oder mehreren der vorhergehenden Ansprüche, **dadurch gekennzeichnet, dass** die Verrastungselemente (10) an Stegen (14) des Zwischenbereichs (5) angeordnet sind.

15. Verbindungseinheit nach Anspruch 2 und 3, **dadurch gekennzeichnet, dass** der Mantelbereich (17) des Hülsenteils (15) mit mehreren Außenrippen (19) versehen ist.

16. Verbindungseinheit nach Anspruch 12, **dadurch gekennzeichnet, dass** der Abschlussring (45) des Dichtelements (20) oberseitig mindestens eine Rippe (50) aufweist.

## Claims

1. Connecting unit between a support (2), in particular a body part of a motor vehicle, and a panel element, in particular a door covering or wall covering, having a connecting element (1) with an upper part (3) which can be fastened to the panel element and a lower part (4) which can be connected to the support (2), an intermediate region (5) which is of neck-shaped design and is provided with latching elements (10) being provided between the upper part (3) and the lower part (4), and the connecting element (1) passing through an engagement part (12) which can be embedded in a support opening (7), **characterized in that** the intermediate region (5) above the support (2) is surrounded by a sleeve part (15) which can be locked to the latching elements (10) and to the engagement part (12), and **in that** a sealing element (20) which acts upon the upper side of the support (2) is arranged between the sleeve part (15) and the engagement part (12).

2. Connecting unit according to Claim 1, **characterized in that** the sleeve part (15) has a circumferential region (17) which is provided on the inside with mating latches (18) for the latching elements (10) of the intermediate region (5).

3. Connecting unit according to Claim 2, **characterized in that** the sleeve part (15) below the circumferential region (17) has a flange (22) which at least partially covers the sealing element (20).

4. Connecting unit according to Claims 1 and 3, **characterized in that** the engagement part (12) is provided with at least two resilient latching webs (30) which, in the fitted state, extend through openings (24) in the flange (22) of the sleeve part (15) and are locked behind said flange.

5. Connecting unit according to Claim 4, **characterized in that** four resilient latching webs (30) lie diagonally opposite one another.

6. Connecting unit according to Claims 4 and 5, **characterized in that** the engagement part (12) has a disc region (35) which is connected on the outside to the webs (30) and on the inside merges into a sleeve region (36) extending through the support opening (7).

7. Connecting unit according to Claim 6, **characterized in that** the sleeve region (36) of the engagement part (12) comprises at least a sublength of the intermediate region (5) and can be locked to said intermediate region.

8. Connecting unit according to Claim 7, **characterized in that** the sleeve region (36) comprises a plurality of resilient engagement tongues (38) which can be embedded on the inside in mating latches (40; 40') of the lower part (4), said mating latches lying at a distance one behind the other.

9. Connecting unit according to Claim 8, **characterized in that** the engagement tongues (38) of the sleeve region (36) are of conically tapering design.

10. Connecting unit according to one or more of Claims 4 to 9, **characterized in that** the latching webs (30) extend through openings (21) in the sealing element (20), and **in that** a peripheral bead (27) of the sealing element (20) is clamped between a curved end edge (32) of the flange (22) and the outside of the respective latching web (30).

11. Connecting unit according to Claim 10, **characterized in that** the sealing element (20) has, on the outside, a sealing lip (28) acting upon the support (2) and, on the inside, a sealing plate (42) which is clamped between the lower side of the flange (22) and the upper side of the disc region (5).

12. Connecting unit according to Claim 11, **characterized in that** the sealing plate (42) merges on the upper side into an end ring (45), the outside diameter of which is matched to the inner wall (47) of the circumferential region (17).

13. Connecting unit according to Claim 12, **characterized in that** the end ring (45) has a funnel opening (49) through which the intermediate region (5) passes.

14. Connecting unit according to one or more of the preceding claims, **characterized in that** the latching elements (10) are arranged on webs (14) of the intermediate region (5).

15. Connecting unit according to Claims 2 and 3, **characterized in that** the circumferential region (17) of the sleeve part (15) is provided with a plurality of outer ribs (19).

16. Connecting unit according to Claim 12, **characterized in that** the end ring (45) of the sealing element (20) has at least one rib (50) on the upper side.

## Revendications

1. Unité de liaison entre un support (2), notamment une partie de carrosserie d'un véhicule automobile, et un élément en forme de plaque, notamment un habillage de portière ou de paroi,
comportant un élément de liaison (1) possédant une partie supérieure (3) pouvant être fixé à l'élément en forme de plaque, et une partie inférieure (4) pouvant être reliée au support (2),
dans laquelle une partie intermédiaire (5) agencée en forme de col et pourvu d'éléments d'encliquetage (10) est prévue entre la partie supérieure (3) et la partie inférieure (4), et l'élément de liaison (1) traverse une partie d'engrènement (12) pouvant être insérée dans une ouverture (7) de support,
**caractérisée en ce**
**que** la partie intermédiaire (5) est entourée, au-dessus du support (2), par une partie formant douille (15), qui peut être verrouillée avec les éléments d'encliquetage (10) et avec la partie d'engrènement (12), et
**qu'**un élément d'étanchéité (20), qui charge la face supérieure du support (2), est disposé entre la partie formant douille (15) et la partie d'engrènement (12).

2. Unité de liaison selon la revendication 1, **caractérisée en ce que** la partie formant douille (15) comporte une partie formant enveloppe (17), qui comporte, sur le côté intérieur, des organes d'encliquetage antagonistes (18) pour les éléments d'encliquetage (10) de la partie intermédiaire (5).

3. Unité de liaison selon la revendication 2, **caractérisée en ce que** 1 partie formant douille (15) comporte, au-dessous de la partie formant enveloppe (17), une bride (22), qui recouvre partiellement l'élément d'étanchéité (20).

4. Unité de liaison selon les revendications 1 et 3, **caractérisée en ce que** la partie d'engrènement (12) comporte au moins deux barrettes élastiques d'encliquetage (30) qui, à l'état monté, s'étendent dans des ouvertures (24) de la bride (22) de la partie formant douille (15) et sont verrouillées en arrière de ces ouvertures.

5. Unité de liaison selon la revendication 4, **caractérisée en ce que** quatre barrettes élastiques d'encliquetage (30) sont disposées en étant opposées en diagonale.

6. Unité de liaison selon les revendications 4 et 5, **caractérisée en ce que** la partie d'engrènement (12) comporte une partie en forme de rondelle (35) qui, sur son côté extérieur, est reliée à des barrettes (30) et, sur son côté intérieur, se prolonge par une partie de douille (36) qui s'étend à travers l'ouverture (7) du support.

7. Unité de liaison selon la revendication 6, **caractérisée en ce que** la partie de douille (36) de la partie d'engrènement (12) s'étend au moins sur une partie de la longueur de la partie intermédiaire (5) et peut être verrouillée avec cette dernière.

8. Unité de liaison selon la revendication 7, **caractérisée en ce que** la partie de douille (36) est constituée par plusieurs languettes élastiques d'engrènement (38), qui peuvent être insérées intérieurement dans des organes d'encliquetage antagonistes (40; 40') situés à distance les uns derrière les autres, de la partie inférieure (4).

9. Unité de liaison selon la revendication 8, **caractérisée en ce que** les languettes d'engrènement (38) de la partie de douille (36) sont agencées de manière à converger avec une forme conique.

10. Unité de liaison selon une ou plusieurs des revendications 4 à 9, **caractérisée en ce que** les barrettes d'encliquetage (30) s'étendent dans des ouvertures (21) de l'élément d'étanchéité (20) et qu'un rebord périphérique (27) de l'élément d'étanchéité (20) est serré entre le bord terminal coudé (32) de la bride (22) et le côté extérieur de la barrette d'encliquetage respective (30).

11. Unité de liaison selon la revendication 10, **caractérisée en ce que** l'élément d'étanchéité (20) comporte, sur son côté extérieur, une lèvre d'étanchéité (28), qui charge le support (2), et côté intérieur, une plaque d'étanchéité (42) serrée entre la face inférieure de la bride (29) et la face supérieure de la partie en forme de rondelle (5).

12. Unité de liaison selon la revendication 11, **caractérisée en ce que** la plaque d'étanchéité (42) se prolonge, sur son côté supérieur, par une bague de terminaison (45), dont le diamètre extérieur est réglé sur la paroi intérieure (47) de la partie formant enveloppe (17).

13. Unité de liaison selon la revendication 12, **caractérisée en ce que** la bague de terminaison (45) possède une ouverture en forme d'entonnoir (49) traversée par la partie intermédiaire (5).

14. Unité de liaison selon une ou plusieurs des revendications précédentes, **caractérisée en ce que** les éléments d'encliquetage (10) sont disposés sur des barrettes (14) de la partie intermédiaire (5).

15. Unité de liaison selon les revendications 2 et 3, **caractérisée en ce que** la partie formant enveloppe (17) de la partie formant douille (15) est équipée de plusieurs nervures extérieures (19).

16. Unité de liaison selon la revendication 12, **caractérisée en ce que** la bague de terminaison (45) de l'élément d'étanchéité (20) comporte, sur son côté supérieur, au moins une nervure (50).
